# EUROPÄISCHE PATENTSCHRIFT

(11) **EP 0 818 650 B1**
(45) Veröffentlichungstag und Bekanntmachung des Hinweises auf die Patenterteilung: **02.05.2003**
(21) Anmeldenummer: 97110114.2
(22) Anmeldetag: 20.06.1997
(51) Int. Cl.: F16L 33/207, F16L 33/00

(54) **Anschlussstutzen für einen flexiblen Schlauch**
Connecting pipe element for a hose
Tubulure de connexion pour tuyau flexible

(30) Priorität: 11.07.1996 DE 19627911
(43) Veröffentlichungstag der Anmeldung: 14.01.1998
(73) Patentinhaber: Volkswagen Aktiengesellschaft, 38436 Wolfsburg (DE)
(72) Erfinder: Buchholz, Peter, 38518 Gifhorn (DE); Pöhland, Andreas, 38518 Gifhorn (DE)
(74) Vertreter: Meyer, Enno, Dr.

(56) Entgegenhaltungen:
- FR-A- 2 652 872
- GB-A- 1 185 220
- US-A- 4 597 594
- US-A- 5 255 944

## Beschreibung

Die Erfindung betrifft einen Anschlußstutzen für einen flexiblen Schlauch mit an der Mantelfläche quer zu seiner Längsfläche ausgebildeten umlaufenden Verdickungen als Klemmanlage für den Schlauch und eine Verbindungsanordnung, insbesondere für einen flexiblen Schlauch, an einem Anschlußstutzen bei Servolenkanlagen.

Aus der DE 34 02 525 ist ein als Anschlußstutzen ausgebildeter Rohrabschluß für einen flexiblen Schlauch bekannt, der an seinem Umfang quer zu seiner Längsachse ausgebildete umlaufende Wülste (Verdickungen) mit einem im Längsschnitt des Anschlußstutzens nahezu symmetrischen Querschnittsprofil aufweist. Die Durchmesser der Wulstkuppen sind vom freien Ende des Schlauchstutzens zum Rohr hin gleich, oder bei einer anderen Ausführungsform zunächst steigend und danach fallend, derart, daß ein die Wulstkuppen einhüllender Mantel in Längsrichtung des Anschlußstutzens radial nach außen aufgewölbt ist, um eine weitere Verbesserung der dichtenden Preßverbindung zu erreichen. Der Anschlußstutzen kann an seinem freien, dem Schlauch zugewandten Ende eine Endverdickung als Aufsteckpartie für den Schlauch aufweisen, die einen etwas größeren radialen und axialen Querschnitt als die Wülste hat. In der Schrift wird auch eine Verbindungsanordnung eines Schlauches mit einem Rohranschluß angegeben, die durch den Anschlußstutzen der beschriebenen Art, den Schlauch und einer Schlauchklemme gebildet ist, die den Schlauch mit einer glatten und stufenlosen Innenwandung auf den Anschlußstutzen drückt bzw. festspannt.

Gegenstand der DE 94 17 871.2 ist ein weiterer Rohrabschluß mit zwei am Umfang quer zu dessen Längsachse ausgebildeten umlaufenden torusartigen Erhebungen (Wülsten) gleichen Durchmessers der Wulstkuppen und einer am schlauchseitigen Ende angeordneten kegelstumpfartigen Erweiterung (Endverdickung) mit einer Aufschiebephase für den Schlauch. Dabei sind die Erhebungen und die Erweiterung im Abstand voneinander angeordnet.

Des weiteren ist in der EP 0 204 445 ein Kunststoff-Rohranschlußstück beschrieben, das eine Anzahl hintereinander angeordneter kegelstumpfförmiger Dichtungsringe, d.h. quer zur Längsachse ausgebildete umlaufende Verdickungen mit dreieckförmigem Profil, aufweist, deren kleinerer Durchmesser jeweils schlauchseitig und der größere rohrseitig ausgebildet ist, so daß der Schlauch über die flacher ausgebildeten Flanken aufschiebbar ist, wobei die jeweils größeren Durchmesser untereinander gleich sind. Am schlauchseitigen Ende ist ein im Durchmesser verringertes, den Schlauch entspannendes Endstück vorgesehen. Die Verbindung des Schlauches mit dem Anschlußstutzen wird mit einer in Parkstellung auf dem Schlauch befindlichen und über den auf dem Rohranschlußstück angeordneten Schlauch schiebbaren Klemmhülse komplettiert, die den Schlauch auf die hintereinander bzw. nebeneinander angeordneten konusförmigen Dichtungsringe drückt.

In Anlehnung an die beschriebenen Ausführungen sind Anschlußstutzen bekannt, die in der Anzahl der quer zur Längsachse ausgebildeten umlaufenden Wülste, Dichtungsringe bzw. Verdickungen, in deren Querschnittsprofil und in der Ausbildung des schlauchseitigen Endstückes variieren, und in Richtung des Rohres stufenartig verringerte Durchmesser aufweisen.

Die mit den bekannten Anschlußstutzen gebildeten druckübertragenden Verbindungsanordnungen zur Anbindung eines flexiblen Druckschlauches an ein Rohr, die üblicherweise mit einer über den Schlauch geschobenen und verpreßten Klemmhülse komplettiert ist, insbesondere bei Servolenkanlagen, und bei denen die flexiblen Druckschläuche aufgrund ihrer konstruktiven Auslegung druckabhängig mit einer Durchmesser- und/oder Längenänderung reagieren, haben den Nachteil, daß auf den Schlauch Zug- und Druckkräfte in axialer Richtung ausgeübt werden. Das bedeutet, daß das Schlauchmaterial auf den Wülsten, Dichtungsringen bzw. Verdickungen bis hin zu einer Schlauchbeschädigung belastet werden kann. Bei Anschlußstutzen mit einer schlauchseitig angeordneten Verdickung größeren Durchmessers gegenüber den anderen Verdickungen wird ein Großteil der wirkenden Zug- und Druckkräfte an dieser Verdickung aufgenommen, so daß diese schlauchseitige Verdickung ein bevorzugter Schadstellenort ist.

US-A-4,597,594 zeigt einen gattungsgemäßen Anschlußstutzen für einen flexiblen Schlauch mit Verdickungen entsprechend dem Oberbegriff von Anspruch 1.

US-A-5,255,944 offenbart eine Verbindungsanordnung für einen flexiblen Schlauch mit einem Anschlußstutzen mit wulstartigen Verdickungen und einer Klemmhülse, wobei der Anschlußstutzen drei unterschiedliche Zonen aufweist, und zwar vom freien Ende zum Rohr hin zuerst eine Zone mit dynamischer Dichtungsfunktion, dann eine Zone statischer Dichtungsfunktion sowie nachfolgend eine Zone mit einer Klemmfunktion.

Es ist deshalb Aufgabe der Erfindung, einen Anschlußstutzen für einen flexiblen Schlauch nach dem Oberbegriff des Anspruchs 1 zu schaffen, durch die die in derem Bereich am druckbelasteten flexiblen Schlauch auftretenden Kräfte gleichmäßiger über diesen verteilt werden, so daß Beschädigungen des Schlauches im Bereich des Anschlußstutzens vermieden und die Lebensdauer des Schlauches erhöht werden.

Diese Aufgabe wird durch einen Anschlußstutzen nach Anspruch 1 gelöst. Bevorzugte Ausgestaltungen der Erfindung sind Gegenstand der Unteransprüche.

Die Erfindung wird nachstehend anhand von Ausführungsbeispielen erläutert. In der zugehörigen Zeichnung zeigen:
- Fig. 1:: einen erfindungsgemäßen Anschlußstutzen mit Verdickungen torusförmigen Profils und mit einer Endverdickung, teilweise geschnitten,
- Fig. 2:: einen erfindungsgemäßen Anschlußstutzen mit Verdickungen dreieckförmigen Profils, teilweise geschnitten, und
- Fig. 3:: eine nicht zur Erfindung gehörende Verbindungsanordnung.

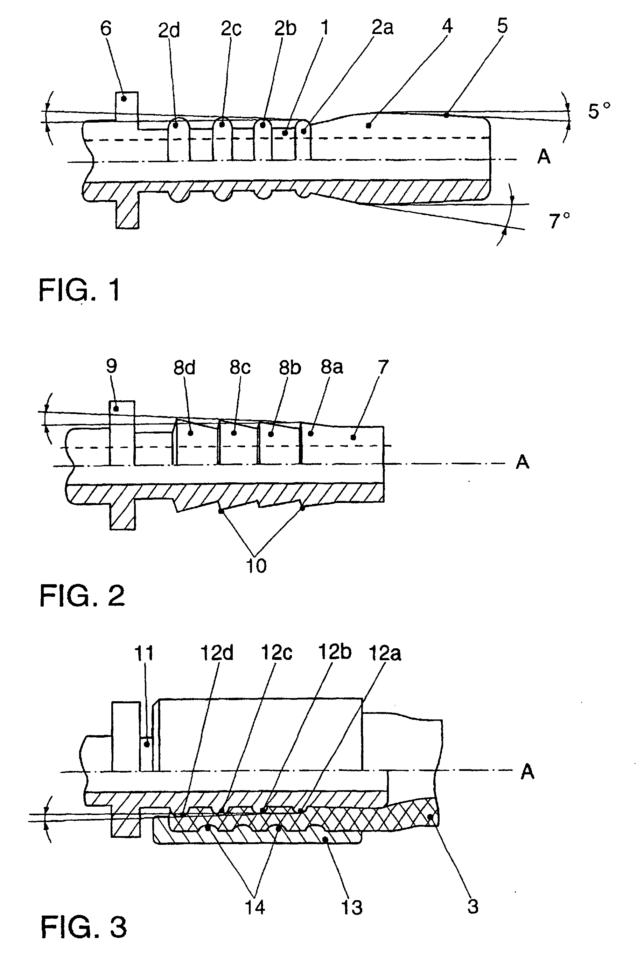

Fig. 1 zeigt einen Anschlußstutzen 1 mit vier an der Mantelfläche quer zu seiner Längsachse A ausgebildeten umlaufenden wulstartigen Verdickungen torusförmigen Querschnittprofils 2a bis 2d als Klemmanlage für einen aufzuschiebenden und fest anzuordnenden flexiblen Schlauch 3 (Fig. 3). Solche druckbeaufschlagten Dehnschläuche werden z. B. als Druckverbindungsschläuche in Servolenkanlagen eingesetzt. Der Anschlußstutzen 1 weist an seinem freien Ende eine Endverdickung 4 mit einer Aufschiebephase 5 auf, die gegenüber der Längsachse A um 5° geneigt ist. Im Anschluß an die Aufschiebephase 5 ist die Endverdickung 4 zum Rohr hin mit einer Neigung von 7° bis zur ersten Verdickung 2a konusartig verjüngt. Der Durchmesser der zwischen der Endverdickung 4 und dem Flansch 6 im gleichmäßigen Abstand angeordneten Verdickungen 2a bis 2d nimmt zu diesem stetig zu, wobei die erste, schlauchseitige Verdickung 2a einen Durchmesser von 8,75 mm und die folgenden einen jeweils um 0,25 mm größeren Durchmesser aufweisen. Damit steigt der Durchmesser bis auf 9,5 mm an der letzten, flanschseitigen Verdickung 2d an. Dieser Durchmesser entspricht auch dem größten Durchmesser der Endverdickung 4 zwischen deren entgegengesetzt geneigten Mantelflächen.

Fig. 2 zeigt einen Anschlußstutzen 7 mit Verdickungen 8a bis 8d im wesentlichen dreieckförmigen Querschnittprofils, wobei der jeweils größte Durchmesser zwischen den abfallenden Flanken einer Verdickung ebenfalls stetig in Richtung auf den Flansch 9 hin um 0,25 mm bis zur Verdickung 8d steigt. Die schlauchseitigen Mantelflächen bzw. Flanken der Verdickungen 8a bis 8d sind flacher und länger ausgebildet als die flanschseitigen, wobei die jeweils zwischen diesen gebildeten umlaufenden Kanten 10 abgerundet sind. Der Rundungsradius beträgt 0,3 mm.

In Fig. 3 ist beispielhaft eine nicht zur Erfindung gehörende Verbindungsanordnung mit einem Anschlußstutzen 11 mit wulstartigen Verdickungen 12a bis 12d dargestellt, die wie im Ausführungsbeispiel nach Fig. 1 angeordnet und ausgebildet sind. Über dem Anschlußstutzen 11 ist ein Elastomerschlauch 3 und über diesem eine Klemmhülse 13 angeordnet, die den Elastomerschlauch 3 zwischen sich und dem Anschlußstutzen 11 festspannt. Die Klemmhülse 13 weist an ihrer Innenwandung quer zu ihrer Längsachse A ausgebildete umlaufende Verdickungen 14 auf, diese dienen als zusätzliche Druckelemente zum Fixieren des Elastomerschlauches 3.

## Patentansprüche

1. Anschlußstutzen für einen flexiblen Schlauch, mit an der Mantelfläche quer zu seiner Längsachse ausgebildeten umlaufenden Verdickungen als Klemmanlage für den Schlauch, wobei der Durchmesser der Verdickungen, die vom freien Ende des Anschlußstutzens zum Rohr hin angeordnet sind, stetig oder in Stufen zunimmt, **dadurch gekennzeichnet, daß** schlauchseitig eine Endverdickung (4) mit einer spitzwinkligen Aufschiebephase (5) für den Schlauch (3) angeordnet ist, deren Durchmesser in etwa dem der rohrseitigen Verdickung (2d) entspricht.

2. Anschlußstutzen nach Anspruch 1, **dadurch gekennzeichnet, daß** die Verdickungen (2a bis 2d; 8a bis 8d; 12a bis 12d) ein torusförmiges oder im wesentlichen dreieckförmiges Querschnittsprofil aufweisen.

3. Anschlußstutzen nach Anspruch 2, **dadurch gekennzeichnet, daß** die schlauchseitigen Mantelflächen der Verdickungen (2a bis 2d; 8a bis 8d; 12a bis 12d) mit dreieckförmigem Querschnittsprofil wesentlich flacher und länger als die rohrseitigen Mantelflächen ausgebildet sind.

4. Anschlußstutzen nach einem der Ansprüche 1 bis 3, **dadurch gekennzeichnet, daß** die Verdickungen (2a bis 2d; 8a bis 8d; 12a bis 12d) im Abstand voneinander angeordnet sind.

## Claims

1. Connecting branch for a flexible hose, having encircling thickened sections formed transversely with respect to its longitudinal axis on the circumferential surface as a clamping system for the hose, the diameter of the thickened sections, which are arranged in the direction of the pipe from the free end of the connecting branch, increasing continuously or in stages, **characterized in that** a final thickened section (4) with an acute-angled push-on phase (5) for the hose (3) is arranged at the hose end, the diameter of which thickened section corresponds approximately to that of the thickened section (2d) at the pipe end.

2. Connecting branch according to Claim 1, **characterized in that** the thickened sections (2a to 2d; 8a to 8d; 12a to 12d) have a toroidal or essentially triangular cross-sectional profile.

3. Connecting branch according to Claim 2, **characterized in that** the hose-end circumferential surfaces of the thickened sections (2a to 2d; 8a to 8d; 12a to 12d) with the triangular cross-sectional profile are of substantially flatter and longer design than the pipe-end circumferential surfaces.

4. Connecting branch according to one of Claims 1 to 3, **characterized in that** the thickened sections (2a to 2d; 8a to 8d; 12a to 12d) are arranged at a distance from one another.

## Revendications

1. Tubulure de connexion pour un tuyau flexible, comprenant des épaississements périphériques réalisés sur sa surface d'enveloppe transversalement à son axe longitudinal, servant de dispositif de serrage pour le tuyau flexible, le diamètre des épaississements, qui sont disposés depuis l'extrémité libre de la tubulure de connexion jusqu'au tube, augmentant progressivement ou par incréments, **caractérisée en ce que** du côté du tuyau flexible, un épaississement terminal (4) est disposé avec un biseau d'enfoncement (5) à angle aigu pour le tuyau souple (3), dont le diamètre correspond approximativement à l'épaissessement (2d) du côté du tube.

2. Tubulure de connexion selon la revendication 1, **caractérisée en ce que** les épaississements (2a à 2d ; 8a à 8d ; 12a à 12d) présentent un profil en section transversale en forme de tore ou essentiellement de forme triangulaire.

3. Tubulure de connexion selon la revendication 2, **caractérisée en ce que** les surfaces d'enveloppe du côté du tuyau souple des épaississements (2a à 2d ; 8a à 8d ; 12a à 12d) sont réalisées avec un profil en section transversale triangulaire essentiellement plus plat et plus long que les surfaces d'enveloppe du côté du tube.

4. Tubulure de connexion selon l'une quelconque des revendications 1 à 3, **caractérisée en ce que** les épaississements (2a à 2d ; 8a à 8d ; 12a à 12d) sont disposés à une certaine distance les uns des autres.
